# EUROPEAN PATENT APPLICATION

(11) **EP 4 768 182 A1**
(43) Date of publication of application: **01.07.2026**
(21) Application number: 25220714.7
(22) Date of filing: 04.12.2025
(51) Int. Cl.: B25B 5/00, B25B 5/10, B25B 5/14, B25B 5/16

(54) **CLAMP AND MOUNTING METHOD OF CLAMP**

(30) Priority: 27.12.2024 JP 2024232167
(71) Applicant: Roland Corporation, Hamamatsu-shi, Shizuoka 431-1304 (JP)
(72) Inventor: KUROKI, Ryo, Shizuoka, 431-1304 (JP)
(74) Representative: Becker, Eberhard

(57) **Abstract**

Provided is a clamp (1) that includes: a housing (2) for holding a holding object (100), and upper and lower claws that protrude forward from the housing (2) and are capable of gripping an object by adjusting an up-down spacing. A lower surface of the upper claw (251, 252) is formed with an upper clamp surface (240, 250) recessed upwardly, and an upper surface of the lower claw (3) is formed with a lower clamp surface (40) recessed downwardly. The upper clamp surface (240, 250) formed between a rear end of the upper clamp surface (250e) and a front end of the upper clamp (250f) surface is positioned above the rear end and the front end of the upper clamp surface. The lower clamp surface (40) formed between a rear end of the lower clamp surface (40c) and a front end of the lower clamp surface (40d) is positioned below the rear end and the front end of the lower clamp surface.

## Description

### BACKGROUND

### Technical Field

The disclosure relates to a clamp and a mounting method of a clamp, and particularly relates to a clamp and a mounting method of a clamp that may be stably mounted to various objects.

### Description of Related Art

For example, Patent Document 1 describes a microphone mounting device 200 (clamp) that includes a frame 230 (housing) that holds a holding object such as a microphone, and a lower claw 201 and an upper claw 203 that protrude forward from the frame 230 and are spaced apart in an up-down direction. The spacing between the lower claw 201 and the upper claw 203 is configured to be adjustable by operating a knob 205.

The lower claw 201 and upper claw 203 are formed with arc-shaped recessed portions 211 to 214 arranged in the front-back direction, and since the recessed portions 212 and 214 have a larger radius of curvature compared to the recessed portions 211 and 213, rods with different diameters may be gripped by the lower claw 201 and upper claw 203. That is, the mounting device 200 may be mounted to different types of rods (objects).

### Prior Art Documents

### Patent Documents

[Patent Document 1] US Patent Application Publication No. 2012/0049025 (e.g., paragraphs 0039 to 0041, FIG. 2)

### SUMMARY

### Technical Problem

In this type of technology, there is a demand for a clamp that may be stably mounted to various objects.

The disclosure has been made to meet this demand, and aims to provide a clamp and a mounting method of a clamp that may be stably mounted to various objects.

### Solution to Problem

To achieve this objective, the clamp of the disclosure includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, an upper surface of the lower claw is formed with a lower clamp surface that is recessed downward, the upper clamp surface as a whole formed between a rear end of the upper clamp surface located at a rearmost portion of the upper claw and a front end of the upper clamp surface located at a frontmost portion of the upper claw is positioned above the rear end and the front end of the upper clamp surface, the lower clamp surface as a whole formed between a rear end of the lower clamp surface located at a rearmost portion of the lower claw and a front end of the lower clamp surface located at a frontmost portion of the lower claw is positioned below the rear end and the front end of the lower clamp surface, and in a side view of the upper claw and the lower claw, in a case of a virtual line connecting the front end of the upper clamp surface and an upper end of a rear end side of the upper clamp surface being a first virtual line, and a virtual line connecting the front end of the lower clamp surface and a lower end of a rear end side of the lower clamp surface being a second virtual line, a spacing between the first virtual line and the second virtual line gradually narrows toward a front side.

The clamp of the disclosure includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, an upper surface of the lower claw is formed with a lower clamp surface that is recessed downward, the clamp includes a first upper claw and a second upper claw arranged at a lateral side of the first upper claw with a spacing therebetween, and in a case of narrowing a spacing between the upper claw and the lower claw, the upper clamp surface and the lower clamp surface is capable of being crossed by the lower clamp surface passing through a gap between the first upper claw and the second upper claw.

The clamp of the disclosure includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, and a pair of upper planes connected to both front and rear ends of the upper clamp surface, an upper surface of the lower claw is formed with a lower clamp surface that is recessed downward, and a pair of lower planes connected to both front and rear ends of the lower clamp surface, on a rear side of the upper plane and the lower plane, a pair of front surfaces of the housing extending in an up-down direction are formed with a left-right spacing therebetween, and the object is capable of being gripped by the upper plane, the lower plane, and the front surface.

In the mounting method of the clamp of the disclosure, the clamp includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, an upper surface of the lower claw is formed with a lower clamp surface that is recessed downward, the upper clamp surface as a whole formed between a rear end of the upper clamp surface located at a rearmost portion of the upper claw and a front end of the upper clamp surface located at a frontmost portion of the upper claw is positioned above the rear end and the front end of the upper clamp surface, the lower clamp surface as a whole formed between a rear end of the lower clamp surface located at a rearmost portion of the lower claw and a front end of the lower clamp surface located at a frontmost portion of the lower claw is positioned below the rear end and the front end of the lower clamp surface, and in the mounting method of the clamp, in a side view of the upper claw and the lower claw, in a case of a virtual line connecting the front end of the upper clamp surface and an upper end of a rear end side of the upper clamp surface being a first virtual line, and a virtual line connecting the front end of the lower clamp surface and a lower end of a rear end side of the lower clamp surface being a second virtual line, the clamp is mounted to the object by gripping the object with the upper clamp surface and the lower clamp surface formed such that a spacing between the first virtual line and the second virtual line gradually narrows toward a front side.

In the mounting method of the clamp of the disclosure, the clamp includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, an upper surface of the lower claw is formed with a lower clamp surface that is recessed downward, the clamp includes a first upper claw and a second upper claw arranged at a lateral side of the first upper claw with a spacing therebetween, and in the mounting method of the clamp, in a case of narrowing a spacing between the upper claw and the lower claw, the lower clamp surface passes through a gap between the first upper claw and the second upper claw, and the clamp is mounted to the object by gripping the object with the upper clamp surface and the lower clamp surface capable of mutual crossing.

In the mounting method of the clamp of the disclosure, the clamp includes a housing capable of holding a holding object, and an upper claw and a lower claw that protrude forward from the housing and are capable of gripping an object by adjusting an up-down spacing, in which a lower surface of the upper claw is formed with an upper clamp surface that is recessed upward, and a pair of upper planes connected to both front and rear ends of the upper clamp surface, an upper surface of the lower claw is formed with a lower clamp surface that is recessed downward, and a pair of lower planes connected to both front and rear ends of the lower clamp surface, on a rear side of the upper plane and the lower plane, a pair of front surfaces of the housing extending in an up-down direction are formed with a left-right spacing therebetween, and in the mounting method of the clamp, the clamp is mounted to the object by gripping the object with the upper plane, the lower plane, and the front surface.

### BRIEF DESCRIPTION OF THE DRAWINGS

FIG. 1 is a front perspective view of the clamp showing a state in which a machine is held.
FIG. 2A is a rear perspective view of the clamp showing a state in which the machine is removed, and FIG. 2B is a front perspective view of the machine showing a state in which the machine is removed from the clamp.
FIG. 3A is a cross-sectional view of the clamp taken along line IIIa-IIIa of FIG. 1, and FIG. 3B is a cross-sectional view of the clamp taken along line IIIb-IIIb of FIG.3A.
FIG. 4 is a partially enlarged cross-sectional view of the clamp showing an enlarged view of part IV of FIG. 3A.
FIG. 5A is a cross-sectional view of the clamp showing a state in which a rod with a relatively large diameter is gripped, and FIG. 5B is a cross-sectional view of the clamp showing a state in which a rod with a relatively small diameter is gripped.
FIG. 6A is a cross-sectional view of the clamp showing a state in which a rod with an even smaller diameter is gripped, and FIG. 6B is a cross-sectional view of the clamp showing a state in which the rod is gripped using the small diameter clamp surface.
FIG. 7A is a cross-sectional view of the clamp showing a state in which a hoop is gripped, and FIG. 7B is a cross-sectional view of the clamp showing a state in which a wood hoop is gripped.

### DESCRIPTION OF THE EMBODIMENTS

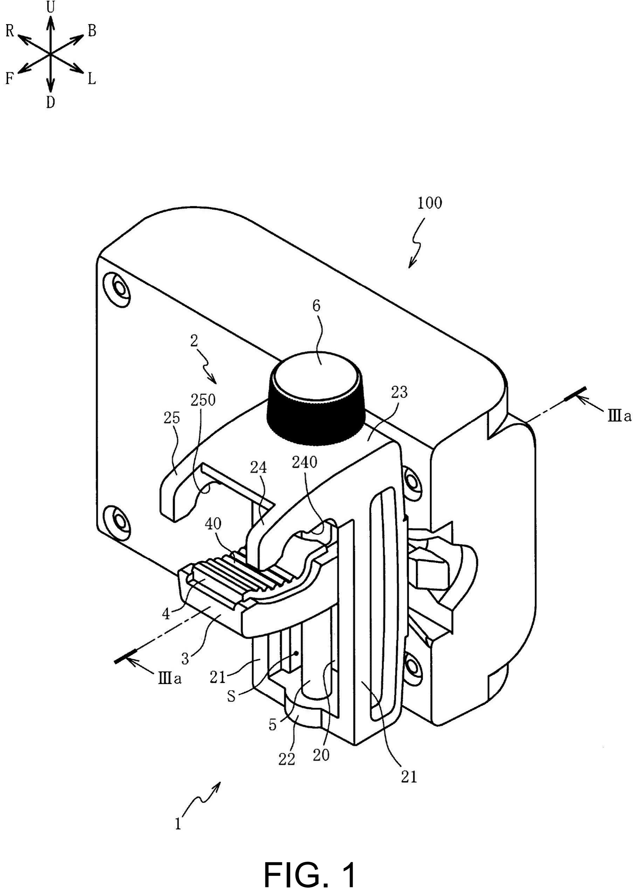

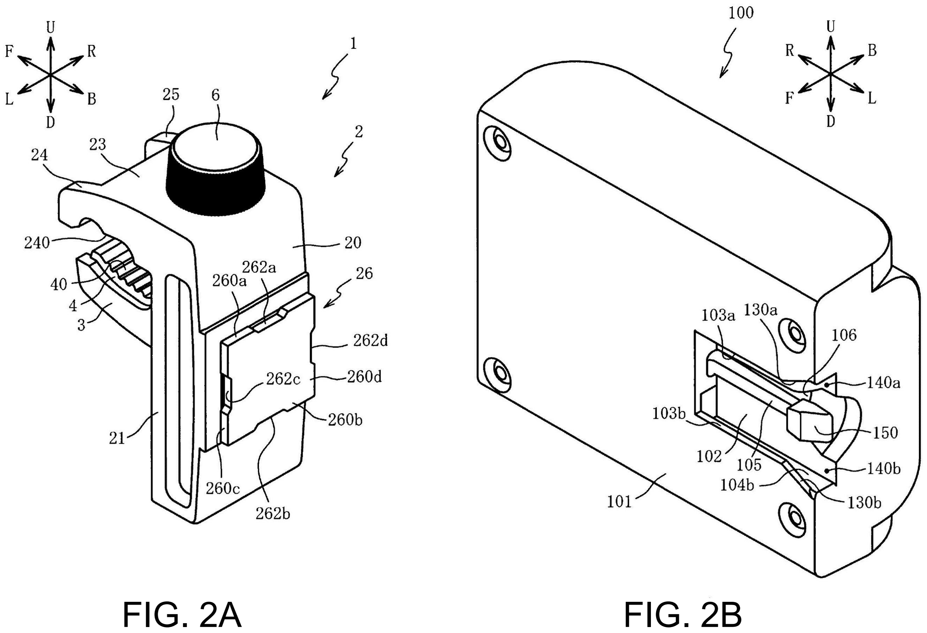

Hereinafter, preferred embodiments will be described with reference to the accompanying drawings. First, the overall configuration of the clamp 1 will be described with reference to FIG. 1, FIG. 2A, and FIG. 2B. FIG. 1 is a front perspective view of the clamp 1 showing a state in which the machine 100 is held, FIG. 2A is a rear perspective view of the clamp 1 showing a state in which the machine 100 is removed, and FIG. 2B is a front perspective view of the machine 100 showing a state in which the machine 100 is removed from the clamp 1.

It is noted that the arrow directions U-D, F-B, and L-R in FIG. 1, FIG. 2A, and FIG. 2B indicate the up-down direction, front-back direction, and left-right direction, respectively, with reference to the clamp 1 (the same applies to subsequent figures). However, each direction of this clamp 1 does not necessarily coincide with each direction of the object to which the clamp 1 is mounted.

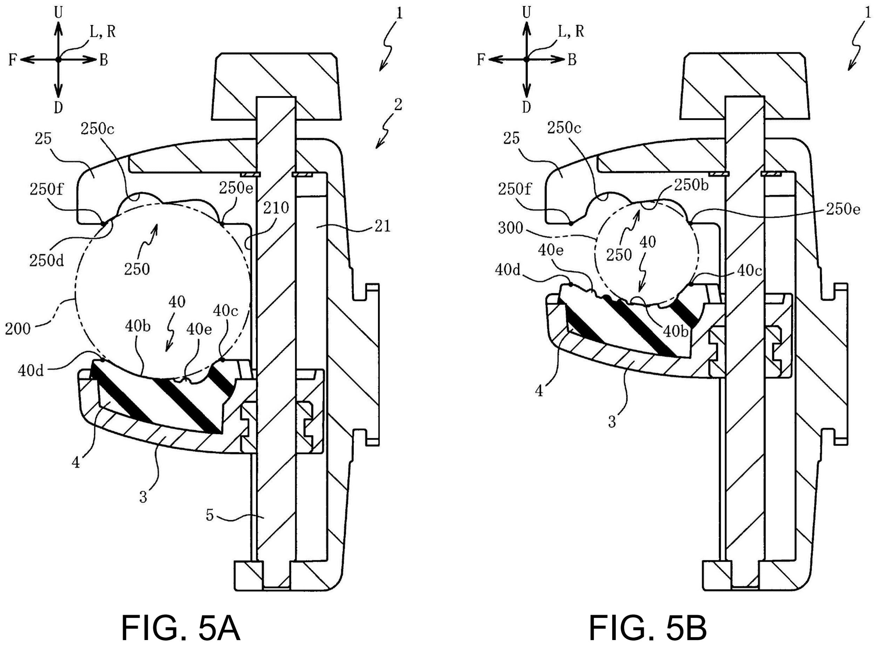

As shown in FIG. 1, FIG. 2A, and FIG. 2B, the clamp 1 is an instrument for mounting a machine 100 such as a wireless adapter to an object. As objects to which the clamp 1 is mounted, for example, rods 200 and 300 (see FIG. 5A and FIG. 5B) that support electronic musical instruments are exemplified, and the machine 100 is used in the case of playing electronic musical instruments supported by the rods 200 and 300 (connected to the electronic musical instruments). The machine 100 is held on the rear surface (surface facing the arrow B side) of the housing 2 of the clamp 1.

The housing 2 includes a rear wall 20 that constitutes the rear surface thereof, and a pair of side walls 21 protrude toward the front side (arrow F side) from both left and right ends (arrow L-R direction) of the rear wall 20. The lower ends (end portions on the arrow D side) of the rear wall 20 and the pair of side walls 21 are connected by a lower wall 22 (see FIG. 1), and the upper ends (end portions on the arrow U side) of the rear wall 20 and the pair of side walls 21 are connected by an upper wall 23. Each of the walls 20 to 23 constituting the housing 2 are integrally formed using a resin material.

The upper claws 24 and 25 protrude toward the front side from the upper end portions of the pair of side walls 21, and the upper claws 24 and 25 are provided as a pair with a spacing therebetween in the left-right direction. This pair of upper claws 24 and 25 are integrally formed with the side walls 21 and upper wall 23 of the housing 2, but the upper claws 24 and 25 may be formed separately from the housing 2.

The lower surfaces of the pair of upper claws 24 and 25 are configured as upper clamp surfaces 240 and 250 (upper clamp surface 250 is shown in FIG. 1) for gripping an object, and below the pair of upper claws 24 and 25, a lower claw 3 that protrudes toward the front side from the housing 2 is provided. An elastic body 4 is fixed to the upper surface of the lower claw 3, and the upper surface of the elastic body 4 is configured as a lower clamp surface 40 for gripping an object together with the upper clamp surfaces 240 and 250 of the upper claws 24 and 25.

The lower claw 3 is formed using the same resin material as the housing 2 (upper claws 24 and 25), and the elastic body 4 is formed using rubber or elastomer. The elastic body 4 may be integrally molded with the lower claw 3 by two-color molding or insert molding, or may be joined to the lower claw 3 by adhesion or the like.

A space S (see FIG. 1) that is open toward the front side is formed in the housing 2, and the rear end portion of the lower claw 3 (portion on the rear side relative to the lower clamp surface 40) is inserted into this space S. The space S is a cavity surrounded by each of the walls 20 to 23, and a shaft 5 (shaft member) for moving the lower claw 3 up and down is provided within the space S. The shaft 5 is a long screw (fully threaded without a head) with a male thread formed on the outer circumferential surface. The shaft 5 is formed in a shaft shape along the up-down direction, and the lower wall 22 and upper wall 23 of the housing 2 are connected in the up-down direction by the shaft 5.

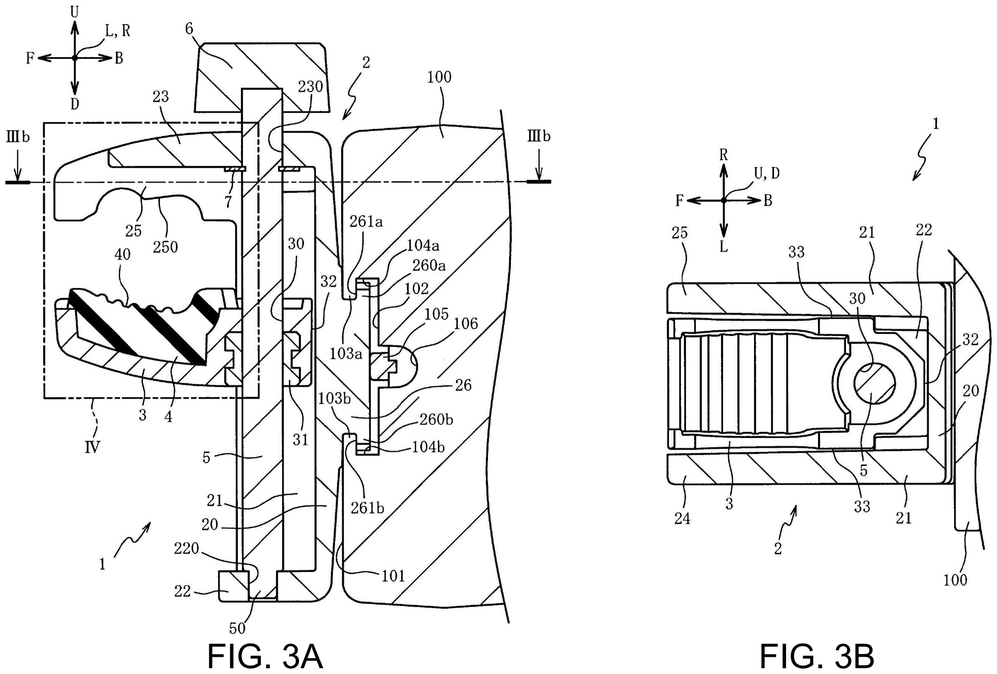

Although details will be described later, a through hole 230 (see FIG. 3A) for passing the shaft 5 is formed in the upper wall 23 of the housing 2, and a tab 6 (operator) is fixed to the upper end part of the shaft 5 that protrudes upward from this through hole 230. By rotating the shaft 5 with this tab 6 to move the lower claw 3 up and down, the spacing between the upper claws 24 and 25 and the lower claw 3 is adjusted.

Next, the holding structure of the machine 100 by the housing 2 will be described with reference to FIG. 2A, FIG. 2B, FIG. 3A, and FIG. 3B. FIG. 3A is a cross-sectional view of the clamp 1 taken along line IIIa-IIIa in FIG. 1, and FIG. 3B is a cross-sectional view of the clamp 1 taken along line IIIb-IIIb in FIG. 3A. It is noted that FIG. 3A is a cross-section perpendicular to the left-right direction (arrow L-R direction) and is a cross-sectional view including the axis of the shaft 5.

As shown in FIG. 2A, FIG. 2B, FIG. 3A, and FIG. 3B, a holding portion 26 for holding the machine 100 is integrally formed on the rear wall 20 of the housing 2. The holding portion 26 protrudes toward the rear side (arrow B side) of the rear wall 20, and from the rear end of the holding portion 26, four holding pieces 260a to 260d extend in each of the up, down, left, and right directions (arrow U-D and L-R directions) of the holding portion 26.

Among the holding pieces 260a to 260d, a pair of holding pieces 260a and 260b that extend up and down are each formed in a flange shape extending left and right (see FIG. 3A), and grooves 261a and 261b (see FIG. 3A) extending left and right are formed between the holding pieces 260a and 260b and the rear surface of the rear wall 20 (housing 2).

The shapes of the holding pieces 260a to 260d are each rotationally symmetric (4-fold symmetric) around the axis in the front-back direction. Thus, although not shown, grooves extending up and down are also formed between the left and right holding pieces 260c and 260d (see FIG. 2A) and the rear wall 20, and the configuration allows the machine 100 to be mounted from all four directions of the holding portion 26.

The machine 100 is held using these holding pieces 260a to 260d and grooves 261a and 261b. An insertion hole 102 for inserting the holding pieces 260a to 260d of the holding portion 26 is formed in the front surface 101 (held surface) of the machine 100. The insertion hole 102 is a substantially rectangular recess, and a pair of slide pieces 103a and 103b facing each other in the up-down direction are formed at the front edges (end portions on arrow F side) of the upper and lower wall surfaces of the insertion hole 102. The slide pieces 103a and 103b are portions that are inserted into the grooves 261a and 261b (see FIG. 3A) of the holding portion 26.

The pair of slide pieces 103a and 103b are each formed in a flange shape extending left and right (see FIG. 3A), and grooves 104a and 104b (groove 104a is shown in FIG. 3A) extending left and right are formed between the bottom surface of the insertion hole 102 (surface facing the holding portion 26) and the slide pieces 103a and 103b. Each of the pair of upper and lower grooves 104a and 104b has openings 140a and 140b (see FIG. 2B) on the left side surface (arrow L side) of the machine 100.

In the case of holding the machine 100 on the holding portion 26, the holding pieces 260a to 260d are inserted from the openings 140a and 140b of the grooves 104a and 104b (the slide piece 103a and 103b are slid along the grooves 261a and 261b). The insertion of the holding pieces 260a to 260d into the grooves 104a and 104b is guided by the inclined portions 130a and 130b (see FIG. 2B) of the pair of slide pieces 103a and 103b.

The inclined portions 130a, 130b are inclined so as to gradually narrow the opposing spacing between each other as they move away from the openings 140a, 140b. Accordingly, by sliding the grooves 261a and 261b of the holding portion 26 along the upper and lower inclined portions 130a and 130b, the holding pieces 260a to 260d may be smoothly inserted into the grooves 104a and 104b.

The opposing spacing between the upper and lower slide pieces 103a and 103b is a spacing that corresponds to the depth of the upper and lower grooves 261a and 261b of the holding portion 26, and according to the holding pieces 260a to 260d being inserted to the terminal ends of the grooves 104a and 104b, the upper and lower slide pieces 103a and 103b are hooked into the grooves 261a and 261b of the holding portion 26 (see FIG. 3A). A hook 105 for fixing the hooking between the grooves 261a and 261b and the slide pieces 103a and 103b is formed on the machine 100.

The hook 105 rises from the wall surface of the insertion hole 102 on the terminal end side of the grooves 104a and 104b (opposite side from the openings 140a and 140b), and a claw portion 150 (see FIG. 2B) is formed at the tip end of the hook 105. In the case of sliding the holding pieces 260a to 260d along the grooves 104a and 104b, the hook 105 elastically deforms toward the rear side by the claw portion 150 of the hook 105 contacting the rear surface of the holding portion 26. This elastic deformation of the hook 105 is allowed by a recessed portion 106 formed on the rear side of the hook 105 (insertion hole 102). The recessed portion 106 is a recess extending left and right from the base end to the tip end of the hook 105.

In response to the claw portion 150 of the hook 105 getting over the holding pieces 260a to 260d, the hook 105 that has elastically deformed toward the rear side restores to its original shape, whereby the claw portion 150 is hooked to the tip ends of the holding pieces 260a to 260d. Trapezoidal recessed portions 262a to 262d (see FIG. 2A) are formed on the respective tip end surfaces of the holding pieces 260a to 260d, and although illustration is omitted, the claw portion 150 of the hook 105 is hooked into these recessed portions 262a to 262d (e.g., in the mounted state of the machine 100 shown in FIG. 1, the claw portion 150 is hooked into the recessed portion 262c (see FIG. 2A)). The hooking between the recessed portions 262a to 262d and the claw portion 150 restricts the machine 100 from falling off from the holding portion 26.

The clamp 1 is mounted to an object in a state where the machine 100 is held by the holding portion 26 in this manner (or the machine 100 is held by the holding portion 26 after the clamp 1 is mounted to the object). A structure for moving the lower claw 3 up and down in the case of mounting the clamp 1 will be described with reference to FIG. 3A and FIG. 3B.

As shown in FIG. 3A and FIG. 3B, a through hole 230 penetrating up and down is formed in the upper wall 23 of the housing 2, and a shaft 5 is inserted into this through hole 230 from the upper side. A small diameter portion 50 having a partially reduced diameter is formed at the lower end of the shaft 5, and this small diameter portion 50 is inserted into a through hole 220 formed in the lower wall 22 of the housing 2.

The lower claw 3 has a through hole 30 penetrating up and down for passing the shaft 5, and a nut 31 is fixed to the inner circumferential side of the through hole 30. It is noted that in this embodiment, the lower claw 3 and the nut 31 are integrally formed by insert molding, but the nut 31 may be joined to the inner circumferential side of the through hole 30 by adhesion or the like.

In a state where the shaft 5 is fastened to the female thread on the inner circumferential side of the nut 31, after fitting the small diameter portion 50 of the shaft 5 into the through hole 220 of the lower wall 22, by mounting an E-ring 7 on the upper end side of the shaft 5, the lower claw 3 and the shaft 5 are assembled to the housing 2. In this assembled state of the lower claw 3, the up-down movement of the shaft 5 is restricted by contact between the step part on the upper end side of the small diameter portion 50 and the lower wall 22, or by contact between the E-ring 7 and the upper wall 23.

Further, in the assembled state of the lower claw 3, the gaps between the rear wall 20 and left and right side walls 21 of the housing 2 and the rear surface 32 and left and right side surfaces 33 of the lower claw 3 are small (or they are in contact). Thus, in the case of rotating the shaft 5 by the tab 6, the rotation of the lower claw 3 is restricted by contact between the rear wall 20 or side wall 21 and the lower claw 3 (only the shaft 5 rotates independently). As a result, the lower claw 3 moves up and down along the shaft 5. In other words, the up-down movement of the lower claw 3 is guided by the rear wall 20 and side walls 21 of the housing 2.

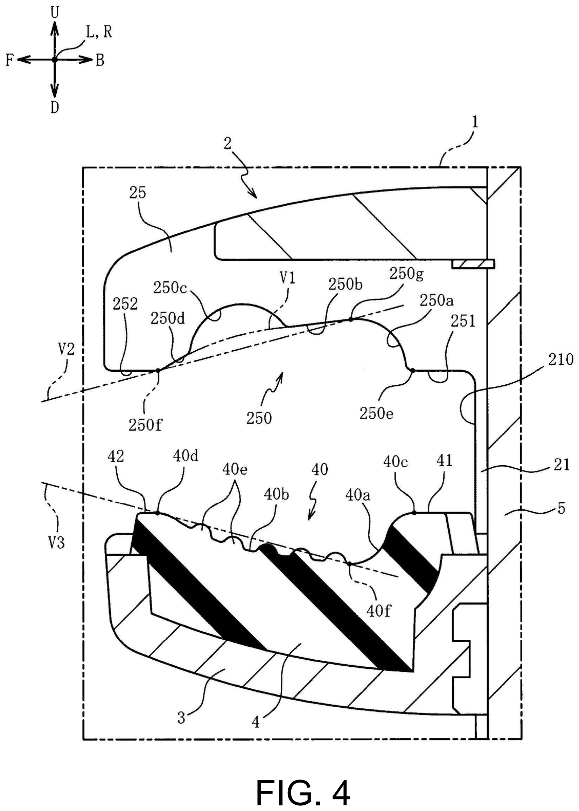

By adjusting the distance between the upper claws 24 and 25 and the lower claw 3 through this up-down movement of the lower claw 3, it becomes possible to grip various objects by the upper and lower clamp surfaces 240, 250, and 40 of the upper claws 24 and 25 and the lower claw 3 (elastic body 4). The detailed configuration of these upper and lower clamp surfaces 240, 250, and 40 will be described with reference to FIG. 4.

FIG. 4 is a partially enlarged cross-sectional view of the clamp 1 enlarging the IV part of FIG. 3A. It is noted that in the following description, the detailed configuration of the upper clamp surface 250 of the upper claw 25 located on the right side of the clamp 1 among the upper claws 24 and 25 will be described, but the upper clamp surface 240 of the upper claw 24 (see FIG. 1, FIG. 2A, or FIG. 2B) has the same configuration as the upper clamp surface 250.

As shown in FIG. 4, the upper clamp surface 250 includes a rear portion clamp surface 250a that constitutes the rear end portion (end portion on arrow B side), a large diameter clamp surface 250b that connects to the front end (end portion on arrow F side) of the rear portion clamp surface 250a, a small diameter clamp surface 250c that connects to the front end of the large diameter clamp surface 250b, and a front portion clamp surface 250d that connects to the front end of the small diameter clamp surface 250c.

The lower surface 251 of the rear end side of the upper claw 25 connects to the rear end 250e of the upper clamp surface 250 (rear end side of the rear portion clamp surface 250a), and the lower surface 252 of the front end side of the upper claw 25 connects to the front end 250f (front end side of the front portion clamp surface 250d). Hereinafter, the dimension from the rear end 250e to the front end 250f of the upper clamp surface 250 will be described as the front-back direction dimension of the upper clamp surface 250.

The rear portion clamp surface 250a is an arc with a radius of curvature smaller than the front-back direction dimension of the upper clamp surface 250, and is formed in an arc shape that is convex toward the rear upper side. The large diameter clamp surface 250b is an arc with a radius of curvature larger than the rear portion clamp surface 250a (front-back direction dimension of the upper clamp surface 250), and is formed in an arc shape that is convex toward the front upper side. The small diameter clamp surface 250c is an arc with a radius of curvature smaller than the large diameter clamp surface 250b (front-back direction dimension of the upper clamp surface 250), and is formed in an arc shape that is convex toward the front upper side.

The front portion clamp surface 250d is formed in an arc shape with the same radius of curvature as the large diameter clamp surface 250b, and in the case of drawing a virtual line V1 (arc along the large diameter clamp surface 250b) that extends the large diameter clamp surface 250b toward the front side, the front portion clamp surface 250d is formed at a position that overlaps with the virtual line V1. In other words, in the case of regarding the large diameter clamp surface 250b and the front portion clamp surface 250d together as a single clamp surface V1, the small diameter clamp surface 250c is formed in a region that includes the front-back direction center of the single clamp surface V1.

The lower clamp surface 40 on the lower claw 3 side includes a rear portion clamp surface 40a that constitutes the rear end portion, and a large diameter clamp surface 40b that connects to the front end of the rear portion clamp surface 40a. The upper surface 41 of the rear end side of the elastic body 4 connects to the rear end 40c of the lower clamp surface 40 (rear end side of the rear portion clamp surface 40a), and the upper surface 42 of the front end side of the elastic body 4 connects to the front end 40d of the lower clamp surface 40 (front end side of the large diameter clamp surface 40b). Hereinafter, the dimension from the rear end 40c to the front end 40d of the lower clamp surface 40 will be described as the front-back direction dimension of the lower clamp surface 40.

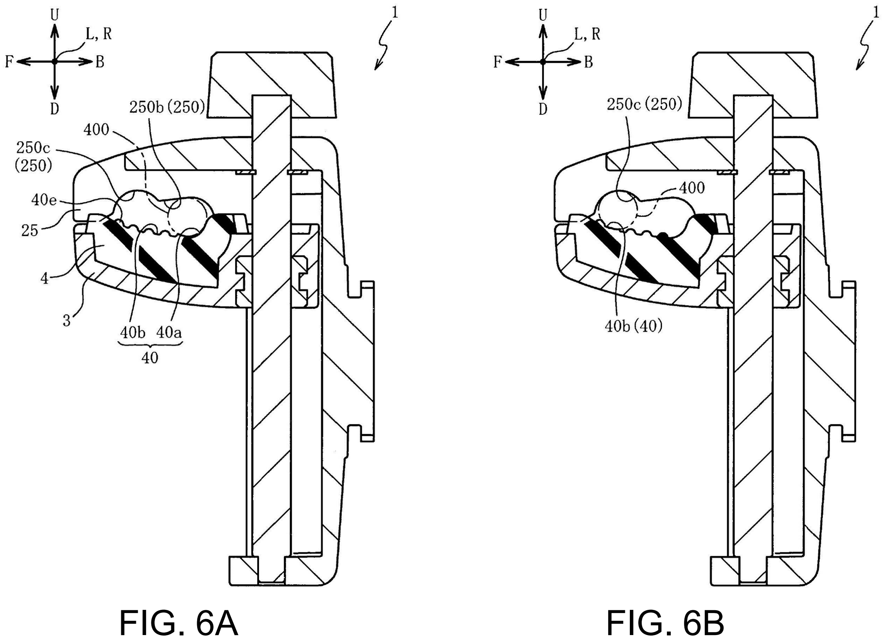

The rear portion clamp surface 40a is an arc with a radius of curvature smaller than the front-back direction dimension of the lower clamp surface 40, and is formed in an arc shape that is convex toward the rear lower side. The large diameter clamp surface 40b is an arc with a radius of curvature larger than the rear portion clamp surface 40a (front-back direction dimension of the lower clamp surface 40), and is formed in an arc shape that is convex toward the front lower side. A plurality of protruding portions 40e are formed on the upper surface of this arc-shaped large diameter clamp surface 40b, and sliding of the lower clamp surface 40 (large diameter clamp surface 40b) with respect to objects such as rods 200 to 400 (see FIG. 5A, FIG. 5B, FIG. 6A, and FIG. 6B) may be prevented.

Next, with reference to FIG. 4 to FIG. 6B, a configuration for gripping the rods 200 to 400 with different diameters by the upper and lower clamp surfaces 250 and 40 will be described. FIG. 5A is a cross-sectional view of the clamp 1 showing a state in which the rod 200 with a relatively large diameter is gripped, and FIG. 5B is a cross-sectional view of the clamp 1 showing a state in which the rod 300 with a relatively small diameter is gripped.

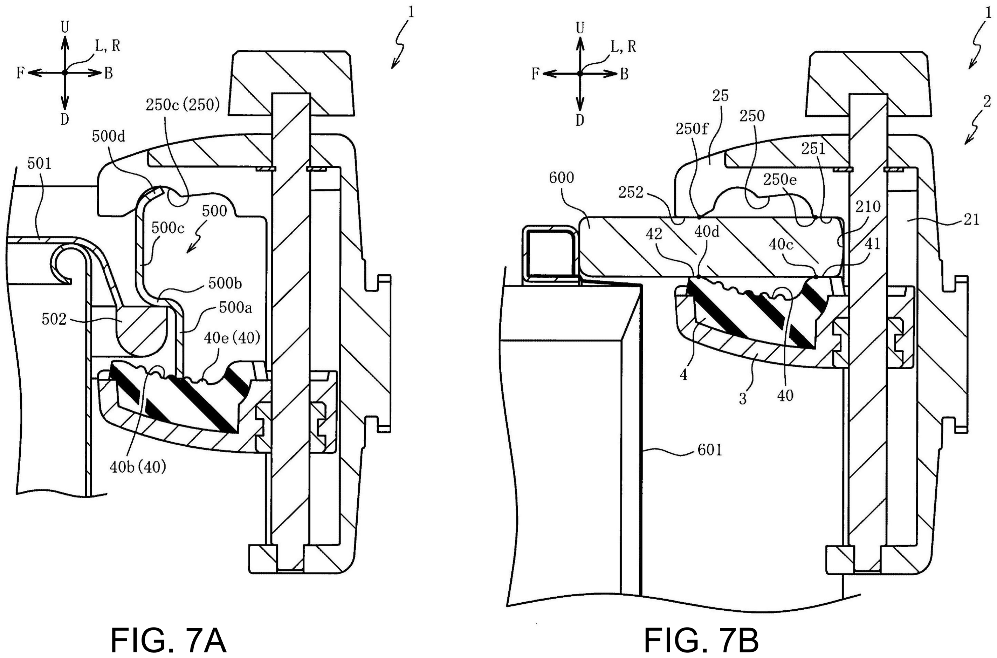

FIG. 6A is a cross-sectional view of the clamp 1 showing a state in which the rod 400 with an even smaller diameter is gripped, and FIG. 6B is a cross-sectional view of the clamp 1 showing a state in which the rod 400 is gripped using the small diameter clamp surface 250c. It is noted that FIG. 5A, FIG. 5B, FIG. 6A, and FIG. 6B are cross-sectional views corresponding to FIG. 3A, but illustrate a state in which the machine 100 is removed from the clamp 1 (the same applies to FIG. 7A and FIG. 7B described later).

Further, in FIG. 5A, FIG. 5B, FIG. 6A, and FIG. 6B, the outer shapes of the rods 200 to 400 to which the clamp 1 is mounted are illustrated with two-dot chain lines. These rods 200 to 400 are cylindrical components that constitute a portion of a stand (drum set) that supports electronic percussion instruments such as electronic drums and electronic cymbals.

First, the related art (US Patent Application Publication No. 2012/0049025) of a clamp that grips this type of rod will be described. In this related art, arc-shaped recessed portions with a large radius of curvature are formed on the rear end sides of the upper and lower claws, while arc-shaped recessed portions with a small radius of curvature are formed on the front end sides of the upper and lower claws.

In this conventional configuration, in the case of gripping a rod using the recessed portions on the front end sides of the upper and lower claws, the position for gripping the rod becomes a position farther from the center of gravity of the clamp compared to the case of using the recessed portions on the rear end sides. Thus, in the case of gripping a rod with the recessed portions on the front end sides of the upper and lower claws, the moment acting on the engaging part between the recessed portions and the rod (moment due to the weight of the clamp and the mass of the holding object of the clamp) tends to become large, so the rod cannot be gripped stably. Particularly, in the case of gripping a horizontal rod, the clamp tends to rotate with respect to the rod.

In contrast, the clamp 1 of this embodiment, as shown in FIG. 4, has the upper clamp surface 250 formed between the rear end 250e and the front end 250f of the upper clamp surface 250 positioned above both the front and rear ends 250e and 250f of the upper clamp surface 250 (in the case of drawing a virtual line connecting the front and rear ends 250e and 250f of the upper clamp surface 250 in side view, the entire upper clamp surface 250 is positioned above the virtual line).

Further, the entire lower clamp surface 40 formed between the rear end 40c and the front end 40d of the lower clamp surface 40 is positioned below both the front and rear ends 40c and 40d of the lower clamp surface 40 (in the case of drawing a virtual line connecting the front and rear ends 40c and 40d of the lower clamp surface 40 in side view, the entire lower clamp surface 40 is positioned below the virtual line). That is, in this embodiment, instead of arranging recessed portions corresponding to the diameter of the rod front and rear as in the related art, the entire upper and lower clamp surfaces 250 and 40 are used to grip the rods 200 to 400 with different diameters.

Then, in the side view of the clamp 1 (left-right direction view), in the case of setting a virtual line connecting the front end 250f of the upper clamp surface 250 and the upper end 250g of the rear end side of the upper clamp surface 250 (rear side from the front-back direction center) as the virtual line V2, and setting a virtual line connecting the front end 40d of the lower clamp surface 40 and the lower end 40f of the rear end side of the lower clamp surface 40 (rear side from the front-back direction center) as the virtual line V3, the spacing between the virtual line V2 and the virtual line V3 gradually narrows toward the front side. That is, except for the region where the small diameter clamp surface 250c and the protruding portion 40e are formed, the spacing between the upper and lower clamp surfaces 250 and 40 is configured to gradually narrow from the rear end side to the front end side.

With such a configuration, as shown in FIG. 5A, in gripping the rod 200 with a relatively large diameter, the rod 200 may be gripped using two points, which are the rear ends 250e and 40c of the upper and lower clamp surfaces 250 and 40, and parts on the front ends 250f and 40d side. The parts on the front ends 250f and 40d side are, for example, the front portion clamp surface 250d in the upper clamp surface 250 and the part on the front end side of the large diameter clamp surface 40b in the lower clamp surface 40.

It is noted that in this embodiment, since the front surface 210 of the side wall 21 (housing 2) extending in the up-down direction is formed on the rear side of the upper and lower clamp surfaces 250 and 40 (the front surface 210 is positioned on the front side relative to the shaft 5), depending on the diameter of the rod 200, the rod 200 may be gripped using the front surface 210 of the side wall 21 in addition to the above two points.

Further, as shown in FIG. 5B, in gripping the rod 300 with a smaller diameter than the rod 200, the rod 300 may be gripped using two points, which are the rear ends 250e and 40c of the upper and lower clamp surfaces 250 and 40, and parts closer to the front-back direction center (parts on the rear end side compared to the case of gripping the rod 200). The parts closer to the front-back direction center are, for example, the front end portion of the large diameter clamp surface 40b in the upper clamp surface 250 and the substantially central part in the front-back direction of the large diameter clamp surface 40b in the lower clamp surface 40.

Further, as shown in FIG. 6A, in gripping the rod 400 with an even smaller diameter than the rod 300, the rod 400 may be gripped using the rear end portion of the large diameter clamp surface 250b of the upper clamp surface 250 or the rear portion clamp surface 40a (rear end portion of the large diameter clamp surface 40b) of the lower clamp surface 40. That is, the rod 400 may be gripped using parts on the rear end side of the upper and lower clamp surfaces 250 and 40 compared to the case of gripping the rod 300.

In this manner, in this embodiment, since the spacing between the upper and lower clamp surfaces 250 and 40 gradually narrows from the rear end side toward the front end side, the rods 200 to 400 may always be gripped using parts on the rear end side of the upper and lower clamp surfaces 250 and 40 (positions close to the center of gravity of the clamp 1) regardless of differences in diameter of the rods 200 to 400. Thus, compared to a configuration in which recessed portions with different radii of curvature are arranged front and rear as in the conventional art, even in the case of gripping the rods 300 and 400 with relatively small diameters, the moment acting on the engaging parts between those rods 300 and 400 and the upper and lower clamp surfaces 250 and 40 becomes difficult to increase. Thus, the clamp 1 may be stably mounted to the rods 200 to 400 with different diameters.

Further, since the lower clamp surface 40 (rear portion clamp surface 40a and large diameter clamp surface 40b) is formed by the elastic body 4 which is more flexible than the upper claw 25 and the lower claw 3, the lower clamp surface 40 easily adheres closely along the outer circumferential surface of the rods 200 to 400. This makes it difficult for the lower clamp surface 40 to slide relative to the rods 200 to 400, so rotation of the clamp 1 around the rods 200 to 400 may be suppressed. Thus, the clamp 1 may be stably mounted to the rods 200 to 400.

Further, since a plurality of protruding portions 40e are formed on the upper surface of the lower clamp surface 40 (large diameter clamp surface 40b), the lower clamp surface 40 becomes even more difficult to slide relative to the rods 200 to 400. Particularly, in this embodiment, since a plurality of protruding portions 40e extending in the left-right direction are formed aligned in the front-back direction, the protruding portions 40e extending along the axial direction of the rods 200 to 400 may be brought into close contact with the outer circumferential surfaces of the rods 200 to 400. This may more effectively suppress sliding of the lower clamp surface 40 relative to the rods 200 to 400, so the clamp 1 may be stably mounted to the rods 200 to 400.

Here, in the above-described conventional art of clamps (U.S. Patent Application Publication No. 2012/0049025), since the upper and lower claws face each other in the up-down direction, the spacing between the upper and lower recessed portions becomes narrowest according to the contact between those claws. Since the diameter of the rod that may be gripped in this state becomes the minimum diameter, constraints are likely to occur in the diameter of the rod that may be gripped by the upper and lower recessed portions.

In contrast, the clamp 1 of this embodiment includes a pair of upper claws 24 and 25 (upper claw 24 is shown in FIG. 1) spaced apart left and right, and as shown in FIG. 6A, in the case of narrowing the spacing between the upper claws 24 and 25 and the lower claw 3, it becomes possible to pass the lower clamp surface 40 (elastic body 4) through the gap between the pair of upper claws 24 and 25. This allows the front end side parts of the upper and lower clamp surfaces 250 and 40 to intersect, so the rod 400 with a smaller diameter may be gripped by the upper and lower clamp surfaces 250 and 40. Thus, the clamp 1 may be mounted to the rods 200 to 400 of various diameters.

It is noted that FIG. 6A illustrates a state in which the upper end part of the elastic body 4 is passed through the gap between the left and right upper claws 24 and 25, but by further narrowing the spacing between the upper claws 24 and 25 and the lower claw 3 from the state shown in FIG. 6A, it is also possible to pass the lower claw 3 through the gap between the left and right upper claws 24 and 25. That is, a rod with an even smaller diameter than the rod 400 may also be gripped by the upper and lower clamp surfaces 250 and 40.

Further, in the case of considering the moment acting on the engaging parts between the upper and lower clamp surfaces 250 and 40 and the rod 400 as described above, it is preferable to grip the rod 400 at the rear end side parts of the upper and lower clamp surfaces 250 and 40. On the other hand, in the case of not needing to consider such moment, as shown in FIG. 6B, it is also possible to grip the rod 400 using the small diameter clamp surface 250c. This allows the mounting position (relative position) of the clamp 1 relative to the rod 400 to be changed according to the purpose, so the versatility of the clamp 1 may be improved.

Next, with reference to FIG. 7A and FIG. 7B, a configuration for gripping the hoop 500 and the wood hoop 600 of an electronic drum by the upper and lower clamp surfaces 250 and 40 will be described. FIG. 7A is a cross-sectional view of the clamp 1 showing a state in which the hoop 500 is gripped, and FIG. 7B is a cross-sectional view of the clamp 1 showing a state in which the wood hoop 600 is gripped.

As shown in FIG. 7A, the hoop 500 is an annular member for applying tension to the head 501 of the electronic drum. The hoop 500 includes an outer circumferential portion 500a disposed on the outer circumferential side (arrow B side) of the head frame 502, and from the upper end of the outer circumferential portion 500a extending in the up-down direction (arrow U-D direction), a pressing portion 500b is bent toward the inner circumferential side (arrow F side). The pressing portion 500b is a part for pressing the head frame 502 downward, and from the end portion of the inner circumferential side of the pressing portion 500b, a standing portion 500c rises upward.

From the upper end of the standing portion 500c, an inclined portion 500d rises with an upward inclination toward the outer circumferential side, and each of these portions 500a to 500d constituting the hoop 500 are integrally formed using metal or the like. In the case of mounting the clamp 1 to such a hoop 500, the outer circumferential portion 500a and the inclined portion 500d of the hoop 500 are sandwiched between the small diameter clamp surface 250c of the upper clamp surface 250 and the large diameter clamp surface 40b of the lower clamp surface 40.

In this way, by using the small diameter clamp surface 250c having a smaller radius of curvature than the large diameter clamp surface 250b, the hoop 500 may be stably gripped by the upper and lower clamp surfaces 250 and 40. That is, in addition to the rods 200 to 400 described above (see FIG. 5A, FIG. 5B, FIG. 6A, and FIG. 6B), the clamp 1 may be stably mounted to the hoop 500.

Further, since the lower clamp surface 40 (large diameter clamp surface 40b) is formed by the elastic body 4, the lower clamp surface 40 may be brought into close contact with the lower surface of the outer circumferential portion 500a of the hoop 500. This makes the lower clamp surface 40 less likely to slide relative to the hoop 500 (outer circumferential portion 500a), so the clamp 1 may be stably mounted to the hoop 500.

Further, since a plurality of protruding portions 40e are formed on the upper surface of the lower clamp surface 40 (large diameter clamp surface 40b), the lower clamp surface 40 becomes even less likely to slide relative to the hoop 500 (outer circumferential portion 500a). In particular, in this embodiment, since the protruding portions 40e extending in the left-right direction are formed aligned in a plurality of rows in the front-back direction, the protruding portions 40e easily come into close contact with the outer circumferential portion 500a extending in the circumferential direction of the hoop 500. This may more effectively suppress sliding of the lower clamp surface 40 relative to the hoop 500, so the clamp 1 may be stably mounted to the hoop 500.

As shown in FIG. 7B, the wood hoop 600 is an annular member for applying tension to the head 601 of the electronic drum, and is formed with a rectangular cross-section using wood. In the case of mounting the clamp 1 to such a rectangular wood hoop 600, a pair of lower surfaces 251 and 252 (upper planes) formed on two end sides in the front-back direction of the upper claw 25 and a pair of upper surfaces 41 and 42 (lower planes) formed on two end sides in the front-back direction of the elastic body 4 are used.

The pair of lower surfaces 251 and 252 of the upper claw 25 are planes that connect to both front and rear ends 250e and 250f of the upper clamp surface 250, and are planes that face downward (perpendicular to the up-down direction). Further, the pair of upper surfaces 41 and 42 of the elastic body 4 are planes that connect to both front and rear ends 40c and 40d of the lower clamp surface 40, and are planes that face upward (perpendicular to the up-down direction).

Then, on the rear side of the lower surface 251 of the upper claw 25 and the upper surface 41 of the elastic body 4 (lower claw 3), the front surface 210 of the side wall 21 (housing 2) extending in the up-down direction is formed. With such a configuration, by sandwiching the wood hoop 600 between the upper and lower claws 25 and 3, the rectangular wood hoop 600 may be gripped using the pair of lower surfaces 251 and 252 of the upper claw 25, the pair of front and rear upper surfaces 41 and 42 of the elastic body 4 (lower claw 3), and the front surface 210 of the side wall 21.

Since the front surface 210 of the side wall 21 is formed as a pair with a spacing in the left-right direction (see FIG. 1), even if a movement occurs in the clamp 1 that rotates the tip end sides of the upper and lower claws 25 and 3 along the inner circumferential surface and the outer circumferential surface of the wood hoop 600, such movement may be effectively regulated by the pair of front surfaces 210. Thus, in addition to the above-described the rods 200 to 400 (see FIG. 5A, FIG. 5B, FIG. 6A, and FIG. 6B) and the hoop 500, the clamp 1 may be stably mounted to the wood hoop 600 as well.

It is noted that the clamp of the above-described conventional technology (US Patent Application Publication No. 2012/0049025) includes flat surfaces corresponding to the lower surface 251 and the upper surface 41 of the upper and lower claws 25 and 3, but does not include surfaces corresponding to the lower surface 252 and upper surface 42 as in this embodiment. Furthermore, in this conventional technology clamp, a member (screw 204) corresponding to the shaft 5 of this embodiment is exposed from the housing. With such a conventional technology clamp, it is difficult to stably grip the wood hoop 600.

On the other hand, in this embodiment, the configuration may stably grip the wood hoop 600 using the planes formed on both front and rear end sides of the upper and lower claws 25 and 3 as described above and the front surface 210 of the side wall 21, and is configured to grip the wood hoop 600 by the upper surfaces 41 and 42 of the elastic body 4. Thereby, the upper surfaces 41 and 42 of the elastic body 4 may be brought into close contact along the inner circumferential surface (or outer circumferential surface) of the curved wood hoop 600, so the clamp 1 may be stably mounted to the wood hoop 600.

The above description has been made based on the above embodiments, but the disclosure is not limited to the above embodiments in any way, and it can be easily inferred that various improvements and modifications are possible within the scope that does not depart from the spirit of the disclosure.

In the above embodiment, the rods 200 to 400, the hoop 500, and the wood hoop 600 were exemplified as examples of objects to which the clamp 1 is mounted, but the disclosure is not necessarily limited thereto. The clamp 1 may be mounted to other members disposed around the electronic musical instruments (or around machines connected to the electronic musical instruments).

In the above embodiment, the machine 100 such as a wireless adapter was exemplified as an example of a holding object held by the clamp 1, but the disclosure is not necessarily limited thereto. For example, objects other than the machine 100, such as accessory devices (peripheral equipment) used in the electronic musical instruments, may be held by the clamp 1. Further, two or more holding objects may be held by the clamp 1, or the holding object may be held on the side surface of the housing 2.

In the above embodiment, the case where the holding portion 26 is formed on the clamp 1 side and engaging portions such as the slide pieces 103a and 103b and the hook 105 that are hooked to the holding portion 26 are formed on the machine 100 side was described, but the disclosure is not necessarily limited thereto. For example, a part corresponding to the holding portion 26 may be formed on the machine 100 side, while an engaging portion that is hooked to the holding portion 26 may be formed on the clamp 1 side.

Further, in the above embodiment, the case where the engaging portion that is hooked to the holding portion 26 is formed on the housing of the machine 100 itself was described, but for example, a configuration may be adopted in which an engaging component equipped with the engaging portion is formed separately from the housing of the machine 100, and the engaging component is attached to the machine 100 later. That is, the holding method of the machine 100 described in the above embodiment is an example, and other known holding methods may be used to hold the machine 100 on the clamp 1.

In the above embodiment, the case where the front surface 210 of the side wall 21 is positioned on the front side of the shaft 5, and the shaft 5 is not exposed on the front side of the housing 2 was described, but the disclosure is not necessarily limited thereto. For example, the front surface 210 of one or two of the pair of side walls 21 may be positioned on the rear side of the front surface of the shaft 5.

In the above embodiment, the case where the spacing between the upper and lower claws 24, 25, and 3 are adjusted by the up-down movement of the lower claw 3 was described, but the disclosure is not necessarily limited thereto. For example, the upper claws 24 and 25 may be moved in the up-down direction, or each of the upper and lower claws 24, 25, and 3 may be moved in the up-down direction.

In the above embodiment, the case where the upper claws 24 and 25 are formed as a pair with a spacing therebetween on the left and right, and the elastic body 4 (lower claw 3) may pass between this pair of upper claws 24 and 25 was described, but the disclosure is not necessarily limited thereto. For example, a configuration in which one or three or more upper claws are formed may be adopted, or a plurality of lower claws 3 may be formed aligned on the left and right. Further, the elastic body 4 (lower claw 3) may be unable to pass through the gap between the upper claws 24 and 25 aligned on the left and right.

In the above embodiment, the case where the small diameter clamp surface 250c is formed on the upper clamp surfaces 240 and 250 was described, but the disclosure is not necessarily limited thereto. For example, a configuration may be adopted in which the small diameter clamp surface 250c is omitted and the large diameter clamp surface 250b and the front portion clamp surface 250d are made into one arc-shaped clamp surface (filling the small diameter clamp surface 250c along the virtual line V1 shown in FIG. 4). Further, a surface corresponding to the small diameter clamp surface 250c (a surface capable of sandwiching the outer circumferential portion 500a of the hoop 500) may be formed on the lower clamp surface 40. Further, a clamp surface corresponding to the lower clamp surface 40 may be formed on the upper claws 24 and 25, while a clamp surface corresponding to the upper clamp surfaces 240 and 250 may be formed on the lower claw 3 (elastic body 4).

In the above embodiment, the case where the lower clamp surface 40 is formed by the elastic body 4 fixed to the lower claw 3 was described, but the disclosure is not necessarily limited thereto. For example, the lower clamp surface 40 may be formed by the upper surface of the lower claw 3 instead of the elastic body 4, or the upper clamp surfaces 240 and 250 may be formed using the elastic body 4.

In the above embodiment, the case where a plurality of protruding portions 40e extending in the left-right direction are formed aligned in the front-back direction on the upper surface of the lower clamp surface 40 of the elastic body 4 was described, but the disclosure is not necessarily limited thereto. For example, a plurality of protruding portions 40e extending in the front-back direction may be formed aligned in the left-right direction, or a plurality of protruding portions 40e extending in a direction inclined with respect to the left-right direction may be formed aligned in the front-back direction. Further, textured protruding portions 40e without such directionality may be distributed on the upper surface of the lower clamp surface 40, or the protruding portions 40e may be omitted.

In the above embodiment, the case where the lower surfaces 251 and 252 of the upper claws 24 and 25 and the upper surfaces 41 and 42 of the elastic body 4 are planes perpendicular to the up-down direction was described, but the disclosure is not necessarily limited thereto. For example, part or all of those surfaces 251, 252, 41, and 42 may be inclined with respect to the front-back direction, or may be formed as curved surfaces.

### Reference Signs List

1 Clamp
2 Housing
210 Front surface of side wall (front surface of housing)
24 Upper claw (first upper claw)
240 Upper clamp surface
25 Upper claw (second upper claw)
250 Upper clamp surface
250b Large diameter clamp surface (first clamp surface)
250c Small diameter clamp surface (second clamp surface)
250e Rear end of upper clamp surface
250f Front end of upper clamp surface
250g Upper end of rear end side of upper clamp surface
251, 252 Lower surface of upper claw (upper plane)
3 Lower claw
4 Elastic body
40 Lower clamp surface (elastic body clamp surface)
40c Rear end of lower clamp surface
40d Front end of lower clamp surface
40e Protruding portion
40f Lower end of rear end side of lower clamp surface
**41, 42** Upper surface of elastic body (lower plane)
100 Machine (holding object)
200~400 Rod (object)
500 Hoop (object)
600 Wood hoop (object)
V2 Virtual line (first virtual line)
V3 virtual line (second virtual line)

## Claims

1. A clamp (1), comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward,
an upper surface of the lower claw is formed with a lower clamp surface (40) that is recessed downward,
the upper clamp surface (240, 250) as a whole formed between a rear end of the upper clamp surface (250e) located at a rearmost portion of the upper claw (24, 25) and a front end of the upper clamp surface (250f) located at a frontmost portion of the upper claw (24, 25) is positioned above the rear end and the front end of the upper clamp surface (250f),
the lower clamp surface (40) as a whole formed between a rear end of the lower clamp surface (40c) located at a rearmost portion of the lower claw (3) and a front end of the lower clamp surface (40d) located at a frontmost portion of the lower claw (3) is positioned below the rear end and the front end of the lower clamp surface, and
in a side view of the upper claw (24, 25) and the lower claw (3), in a case of a virtual line connecting the front end of the upper clamp surface (250f) and an upper end of a rear end side of the upper clamp surface (250g) being a first virtual line (V2), and a virtual line connecting the front end of the lower clamp surface (40d) and a lower end of a rear end side of the lower clamp surface (40f) being a second virtual line (V3), a spacing between the first virtual line (V2) and the second virtual line (V3) gradually narrows toward a front side.

2. A clamp (1), comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward,
an upper surface of the lower claw (3) is formed with a lower clamp surface (40) that is recessed downward,
the clamp (1) comprises a first upper claw (24) and a second upper claw arranged at a lateral side of the first upper claw (24) with a spacing therebetween, and
in a case of narrowing a spacing between the upper claw (24, 25) and the lower claw (3), the upper clamp surface (240, 250) and the lower clamp surface (40) is capable of being crossed by the lower clamp surface (40) passing through a gap between the first upper claw (24) and the second upper claw.

3. A clamp (1), comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward, and a pair of upper planes connected to both front and rear ends of the upper clamp surface,
an upper surface of the lower claw (3) is formed with a lower clamp surface (40) that is recessed downward, and a pair of lower planes connected to both front and rear ends of the lower clamp surface,
on a rear side of the upper plane and the lower plane, a pair of front surfaces of the housing (2) extending in an up-down direction are formed with a left-right spacing therebetween, and
the object is capable of being gripped by the upper plane, the lower plane, and the front surface.

4. The clamp (1) according to claim 1, comprising a first upper claw (24) and a second upper claw arranged at a lateral side of the first upper claw (24) with a spacing therebetween,
wherein in a case of narrowing a spacing between the upper claw (24, 25) and the lower claw (3), the upper clamp surface (240, 250) and the lower clamp surface (40) are capable of being crossed by the lower clamp surface (40) passing through a gap between the first upper claw (24) and the second upper claw.

5. The clamp (1) according to claim 1, wherein the lower surface of the upper claw (251, 252) is formed with a pair of upper planes connected to both front and rear ends of the upper clamp surface,
the upper surface of the lower claw (3) is formed with a pair of lower planes connected to both front and rear ends of the lower clamp surface,
on a rear side of the upper plane and the lower plane, a pair of front surfaces of the housing (2) extending in an up-down direction are formed with a left-right spacing therebetween, and
an object is capable of being gripped by the upper plane, the lower plane, and the front surface.

6. The clamp (1) according to any one of claims 1 to 5, wherein at least one of the upper clamp surface (240, 250) and the lower clamp surface (40) comprises a first clamp surface and a second clamp surface connected to a front end of the first clamp surface and having a smaller radius of curvature than the first clamp surface.

7. The clamp (1) according to any one of claims 1 to 5, wherein at least one clamp surface of the upper clamp surface (240, 250) and the lower clamp surface (40) is made of an elastic body (4).

8. The clamp (1) according to claim 7, wherein the clamp surface made of the elastic body (4) is formed with a plurality of protruding portions (40e).

9. The clamp (1) according to claim 8, wherein the clamp surface made of the elastic body (4) is formed with the plurality of protruding portions (40e) extending in a left-right direction and aligned in a front-back direction.

10. A mounting method of a clamp (1), the clamp (1) comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward,
an upper surface of the lower claw (3) is formed with a lower clamp surface (40) that is recessed downward,
the upper clamp surface (240, 250) as a whole formed between a rear end of the upper clamp surface (250e) located at a rearmost portion of the upper claw (24, 25) and a front end of the upper clamp surface (250f) located at a frontmost portion of the upper claw (24, 25) is positioned above the rear end and the front end of the upper clamp surface (250f),
the lower clamp surface (40) as a whole formed between a rear end of the lower clamp surface (40c) located at a rearmost portion of the lower claw (3) and a front end of the lower clamp surface (40d) located at a frontmost portion of the lower claw (3) is positioned below the rear end and the front end of the lower clamp surface, and
in the mounting method of the clamp, in a side view of the upper claw (24, 25) and the lower claw (3), in a case of a virtual line connecting the front end of the upper clamp surface (250f) and an upper end of a rear end side of the upper clamp surface (250g) being a first virtual line (V2), and a virtual line connecting the front end of the lower clamp surface (40d) and a lower end of a rear end side of the lower clamp surface (40f) being a second virtual line (V3), the clamp is mounted to the object by gripping the object with the upper clamp surface (240, 250) and the lower clamp surface (40) formed such that a spacing between the first virtual line (V2) and the second virtual line (V3) gradually narrows toward a front side.

11. A mounting method of a clamp (1), the clamp (1) comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward,
an upper surface of the lower claw (3) is formed with a lower clamp surface (40) that is recessed downward,
the clamp comprises a first upper claw (24) and a second upper claw arranged at a lateral side of the first upper claw with a spacing therebetween, and
in the mounting method of the clamp, in a case of narrowing a spacing between the upper claw (24, 25) and the lower claw (3), the lower clamp surface (40) passes through a gap between the first upper claw (24) and the second upper claw, and the clamp is mounted to the object by gripping the object with the upper clamp surface (240, 250) and the lower clamp surface (40) capable of mutual crossing.

12. A mounting method of a clamp (1), the clamp (1) comprising:
a housing (2) capable of holding a holding object (100), and an upper claw (24, 25) and a lower claw (3) that protrude forward from the housing (2) and are capable of gripping an object by adjusting an up-down spacing, wherein
a lower surface of the upper claw (251, 252) is formed with an upper clamp surface (240, 250) that is recessed upward, and a pair of upper planes connected to both front and rear ends of the upper clamp surface,
an upper surface of the lower claw (3) is formed with a lower clamp surface (40) that is recessed downward, and a pair of lower planes connected to both front and rear ends of the lower clamp surface,
on a rear side of the upper plane and the lower plane, a pair of front surfaces of the housing (2) extending in an up-down direction are formed with a left-right spacing therebetween, and
in the mounting method of the clamp, the clamp is mounted to the object by gripping the object with the upper plane, the lower plane, and the front surface.
